# EUROPEAN PATENT SPECIFICATION

(11) **EP 2 337 650 B1**
(45) Date of publication and mention of the grant of the patent: **28.03.2018**
(21) Application number: 09782531.9
(22) Date of filing: 03.09.2009
(51) Int. Cl.: B23K 11/00, B23K 20/10, H01R 43/02

(54) **APPARATUS AND METHOD FOR CONSOLIDATION WELDING**
VORRICHTUNG UND VERFAHREN ZUM KOMPAKTIERSCHWEISSEN
APPAREIL ET PROCÉDÉ DE SOUDURE AVEC TASSEMENT

(30) Priority: 04.09.2008 DE 102008045751
(43) Date of publication of application: 29.06.2011
(73) Proprietor: TE Connectivity Germany GmbH, 64625 Bensheim (DE)
(72) Inventor: GERST, Michael, 67551 Worms (DE); KNAPP, Horst, J. T., 64846 Gross-zimmern (DE); SAMSTAG, Stefan, 64683 Einhausen (DE); STEGMAYER, Gerd, 64560 Riedstadt (DE)
(74) Representative: Patentanwaltskanzlei WILHELM & BECK
(86) International application number: PCT/EP2009/061367
(87) International publication number: WO 2010/026173

(56) References cited:
- WO-A-2008/152000
- DE-C1- 3 719 083
- US-A1- 2004 178 249
- US-A1- 2008 032 569

## Description

The invention concerns a method and an apparatus for consolidation welding of an electrical conductor, in particular to an electrical terminal, e.g. an electrical pin or socket contact, preferably for resistance-monitored circuitry in a motor vehicle.

In the automotive industry, simple, fast connection of electrical conductors, suitably for mass production, to electrical terminals for vehicle electrical systems is desirable. Such a known method is so-called consolidation welding of an electrical conductor to an electrical terminal. In consolidation welding, consolidation of the individual wires of the conductor and welding of such a conductor packet onto the terminal take place simultaneously. An insulation crimp can also be produced. In this way, high efficiency, safety and low cost per welding process are achieved. However, known consolidation welding methods have the disadvantage that a width of an electrical connection zone of the terminal must be closely matched to a size of a conductor to be connected electrically. In this way, the known consolidation welding methods lose flexibility, since without retooling an apparatus for consolidation welding, essentially only one pairing of a conductor and a terminal can be processed. The results for such a welding apparatus are throughput penalties and cost disadvantages.

In a known apparatus for electrical consolidation welding, a welding die is delimited by ceramic jaws, which during the welding process stand on the side of a bottom electrode of the welding apparatus. A connection zone of the electrical terminal is adjusted to a width of the electrodes (top and bottom electrodes), or the width of the electrodes is adjusted to a width of the connection zone. The electrical conductor of a cable, consisting of multiple individual wires, is pressed by a movable top electrode, which is slightly narrower than the bottom electrode, onto the connection zone of the terminal, and is distributed over the whole width of the electrical connection zone. Now, if a comparatively thin conductor is to be connected to a comparatively large connection zone, a traditional consolidation welding method can no longer be properly carried out. In alternative consolidation welding methods to this, in a previous operation, the electrical inner conductor of the cable, consisting of multiple individual wires, is consolidated into a solid block, and only then welded on. A disadvantage of such a method is an additional and therefore cost-intensive operation, to obtain the desired result.

DE 37 19 083 C1 and US 2004/0178249A1 discloses such a method and a corresponding apparatus for consolidation welding of strands of an electrical conductor, a compression chamber, in which the strands are welded to each other by ultrasonic effect, being formed by means of a sonotrode, two anvils and a crosshead. The first anvil is arranged near a sonotrode surface so that it can move horizontally, and forms a first anvil surface with its face. The second anvil is directly next to the sonotrode, is arranged so that it can move vertically, and forms a second anvil surface with a side surface. The crosshead, which is mounted on the second anvil, forms a third anvil surface with an underside. During the welding process, the three anvil surfaces and the sonotrode surface form the compression chamber, in which the strands are welded. A consolidation welding method of strands onto an electrical terminal is not provided.

DE 3 437 749 A1 discloses a method and an apparatus for consolidation welding of strands of an electrical conductor onto a support, the strands being welded to each other by ultrasonic effect, and simultaneously welded to the support. The support is arranged on an anvil, a compression chamber, into which the strands are inserted, being formed by means of two jaws which are arranged movably over the support. A sonotrode, which welds the strands together onto the support, can be moved into the compression chamber from a side opposite the anvil. A width of the consolidated strands on the support always corresponds to a width of a free end of the sonotrode; this means that if this width is to be changed, the sonotrode must be replaced by a different form of sonotrode.

US 2008/0032569 and EP 1 771 274 A2 disclose a method and an apparatus for ultrasonic consolidation welding of strands of an electrical conductor to a support, the strands and the support being put into a compression chamber of the welding apparatus together. When the strands and the support are put into the developing compression chamber, a horizontally movable delimiting element for the compression chamber is moved forward on a sonotrode surface as far as a second delimiting element, which is arranged directly next to the sonotrode, until a width of the compression chamber corresponds essentially to a width of the support. The second delimiting element, which is movable vertically along the sonotrode, has, in its side facing away from the sonotrode, a projecting, horizontally movable anvil, the second delimiting element and the anvil being moved forward until the compression chamber is essentially sealed off in the direction of the perimeter. A width of the consolidated strands on the support always corresponds to a width of the support; this means that if this width is to be changed, a support with a different width must be used.

It is not possible with any of the above-mentioned methods and apparatuses to influence a width of a section, which has been welded onto a terminal and consolidated, of an electrical conductor, without retooling a corresponding apparatus or using a different terminal with a different width of its electrical connection zone. It is therefore an object of the invention to make available an improved method and an improved apparatus for consolidation welding of an electrical conductor, preferably to an electrical terminal. In particular, it is an object of the invention to make available an apparatus and a method for consolidation welding which make it possible - without retooling the apparatus for consolidation welding - to achieve a variable weld width of the conductor on the terminal, i.e. to be able to connect even different terminals to different cables in a mechanically strong, electrically conducting way. It should preferably be possible to achieve this for a wide range of conductors of different thickness, with a variable width of their sections to be consolidated onto the relevant connection zones of the terminals.
WO 2008/152000 A1 **and** DE 10 2007 027 208 A1 **(prior right) disclose a process and an apparatus for consolidation welding of an electric conductor to an the electrical terminal, such as for example an electric pin or socket contact, in particular for resistance-monitored circuits in a motor vehicle. The apparatus comprises a top and a bottom welding tool between which the electrical terminal and the conductor can be provided for mutual welding. Further, the device comprises two welding members between which the electric conductor can be clamped during welding, wherein the welding members can be attached on that side of the electrical terminal on which the electric conductor can be provided. A fixed width of a welding area is defined by a fixed width of the top welding tool.**

The object of the invention is achieved by means of an apparatus and by a method for consolidation welding of an electrical conductor, in particular to an electrical terminal, preferably for resistance-monitored circuitry of a motor vehicle, according to Claim 1 or Claim 7. Additional embodiments of the invention are given in the dependent claims.

In an embodiment of the apparatus according to the invention for consolidation welding of an electrical conductor to an electrical terminal, the apparatus has a bottom tool on which a conductor section to be consolidated can be arranged, and a top tool which is movable in a plane, a width of the conductor section to be consolidated being variably adjustable by means of the top tool and the bottom tool. For this purpose, the top tool and also the bottom tool are constructed in two parts, both the top tool and the bottom tool having a movable or deformable welding tool, which is movable or deformable in such a way that, working with a different welding tool of the bottom tool and top tool respectively, they seal off a compression chamber, defined by the width of the conductor section to be consolidated, in a direction of the perimeter of the compression chamber.

The movable or deformable welding tool of the top tool and of the bottom tool is a welding jaw, which is preferably ceramic. The other welding tools of the top tool and of the bottom tool are welding devices, corresponding to each other, for an electrical or ultrasonic welding method, i.e. in the form of electrodes or a sonotrode and an anvil. According to the invention, the welding jaws are not pressed onto an electrical connection zone of the terminal as in the prior art, but onto the appropriate welding device.
Two welding tools are combined in the top tool and two welding tools are combined in a bottom tool. The top tool is provided on/in a holder. The welding jaw of the top tool is provided elastically on/in the holder, The bottom tool is provided on/in a holder and the welding jaw of the bottom tool is provided elastically on/in the holder.

Preferably, both welding devices are of wider form than the electrical terminal or the width of the electrical conductor section to be consolidated. Also, the welding jaws of the top tool and of the bottom tool are arranged movably relative to the other welding device in the top tool and in the bottom tool respectively. Here it is preferred that the welding device and welding jaw of the top tool and of the bottom tool are directly adjacent to each other, with a common side, and are supported elastically. It is also preferred that the two welding jaws are arranged essentially diagonally to each other, and the two welding devices are essentially opposite each other.

According to the invention, an electrical terminal can be positioned on the welding device of the bottom tool, on the connection zone of which the section to be consolidated of the electrical conductor can be provided. By means of the welding jaw and welding device of the top tool and the welding jaw of the bottom tool, the compression chamber is formed on the connection zone of the terminal. The top tool is carried on/in a holder, its welding jaw being carried elastically on/in the holder. The bottom tool is also carried on/in a holder, its welding jaw also being carried elastically on/in the holder. According to the invention, the holder of the top tool, or the top tool, can be moved in two directions, which are essentially perpendicular to each other, preferably vertical and horizontal.

In an embodiment of the method according to the invention, the electrical conductor section to be consolidated is positioned on the terminal. Additionally, the compression chamber, the width of which is variable, is formed around the conductor section to be consolidated by the welding jaw of the bottom tool and the welding device and welding jaw of the top tool. The consolidation welding method is then carried out, the conductor section to be consolidated being consolidated and welded.

Also, before the positioning of the section to be consolidated of the electrical conductor, an electrical terminal can be provided on the welding tool of the bottom tool. After that, the conductor section to be consolidated is then positioned on an electrical connection zone of the terminal. Next, the welding jaw of the top tool is at least partly placed on the connection zone of the terminal, in such a way that the width of the compression chamber on the connection zone is limited. The compression chamber is then formed on the connection zone by the top tool welding device, which is displaceable relative to the top tool welding jaw, and the bottom tool welding jaw, which is displaceable relative to the bottom tool welding device.

Also, in embodiments of the invention, before or after execution of the consolidation welding method, an insulation crimp of the electrical terminal with the electrical conductor can be produced by a crimping tool of the apparatus according to the invention; i.e. the crimp clips of the terminal are closed.

By means of the tools (welding jaw, welding device), which are adjustable relative to each other, in the top tool and bottom tool, and of the movable top tool, an apparatus is provided for consolidation welding, which makes different weld widths possible on an electrical terminal or on an electrical connection of a lead frame without replacing mechanical components; i.e. the weld widths are completely automatically adjustable according to the invention.

According to the invention, terminals with connection zones of different widths can be processed without replacing components. This also means that the same connection zones can be used for a wide range of different sizes of conductors. A process, which was previously included upstream, of consolidating the electrical conductor can be omitted. Also, for the case of an electrical welding method, the top electrode and bottom electrode can be wider and/or more solid than in the prior art, which considerably increases the useful life of the electrodes.

By means of the apparatus according to the invention and the method according to the invention, it is possible to connect a comparatively thin conductor electrically to a comparatively wide connection zone. Also, in the case of electrical conductors of different thickness, an identical welding surface can be achieved, or depending on the size ratios of the conductor (cross-section) and the electrical connection zone (area), a welding surface can be adjusted. In particular, the invention is advantageous for electrical signal contacts, e.g. for an airbag or a sensor connection in a motor vehicle, since such electrical circuits are usually resistance-monitored, and according to the invention an electrical resistance can be set precisely. Thus failures or malfunctions of the affected electrical or electronic device are avoided.

The invention is explained in more detail below on the basis of embodiments and with reference to the attached schematic drawings. In the drawings:
Fig. 1 shows a basic structure of an apparatus for consolidation welding of an electrical conductor to an electrical terminal, and a sequence of a corresponding method;
Figs. 2 to 7 show an apparatus according to the prior art for consolidation welding, and an associated method sequence; and
Figs. 8 to 15 show an apparatus according to the invention for consolidation welding, and an associated method sequence according to the invention.

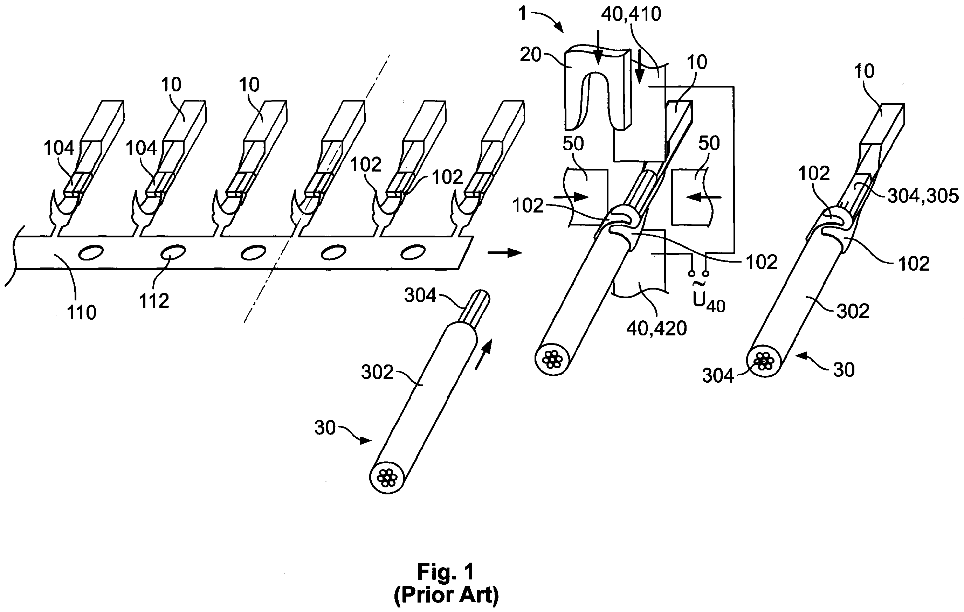

In the following explanation, the invention is explained in more detail on the basis of an apparatus and a method for consolidation welding of an electrical conductor to an electrical socket contact, proceeding from the prior art shown in Figs. 1 and Figs. 2 through 7. However, the invention is not intended to be restricted to such a socket contact, but to include electrical connections and electrical terminals generally. This concerns, for example, a terminal on an electrical pin contact, a terminal or an electrical lead frame. The invention is also not restricted to applications in the automotive sector. The invention is also explained in more detail on the basis of an apparatus and a method for electrical resistance consolidation welding. However, the invention is not intended to be restricted to such an apparatus and such a method, but can also be applied to other welding apparatuses and welding methods.

Fig. 1 shows, in a three-dimensional view, a basic structure of an apparatus 1 for consolidation welding. Multiple electrical terminals 10, coming from the left (with reference to Fig. 1), are fed via a feed device to the apparatus 1, to be connected electrically to a cable 30. For further transport of the connected terminals 10, a support strip 110 of the terminals 10 has transport openings 112, by means of which the support strip 110 can be moved forward into a welding range of the consolidation welding apparatus 1.

If the terminal 10 is in the welding range of the apparatus 1 for consolidation welding, first a free end section of the electrical cable 30 is placed on a rear section of the terminal 10, in which case a stripped free end section of an electrical conductor 304 of the cable 30 comes to rest on an electrical connection zone 104 of the terminal 10. A region, which is still electrically insulated, of the cable 30 is in the region of two crimp clips 102 of the terminal 10.

First the crimp clips 102 are closed by means of a crimping tool 20, which for example can be in the form of a bending punch, resulting in a mechanically strong connection of the cable 30 to the electrical terminal 10 via its electrical insulation 302. Also, preferably in the same operation, the terminal 10 is separated from its support strip 110, i.e. the crimping tool 20 separates the terminal 10 from the support strip 110. Next, two lateral welding jaws 50 and two electrodes 40 are moved forward onto the region to be welded between the conductor 304 and the connection zone 104 of the terminal 10.

If the two welding jaws 50 and the two electrodes 40 are in their respective working positions, the free end section of the conductor 304 is consolidated and welded to the connection zone 104 of the terminal 10. Then the cable 30, which is connected to the terminal 10 frictionally by means of the crimp clips 102 and materially in one piece with it by means of consolidation welding, is removed from the consolidation welding apparatus 1 and can be guided to further processing. Next, a further electrical terminal 10 is inserted into the consolidation welding apparatus 1.

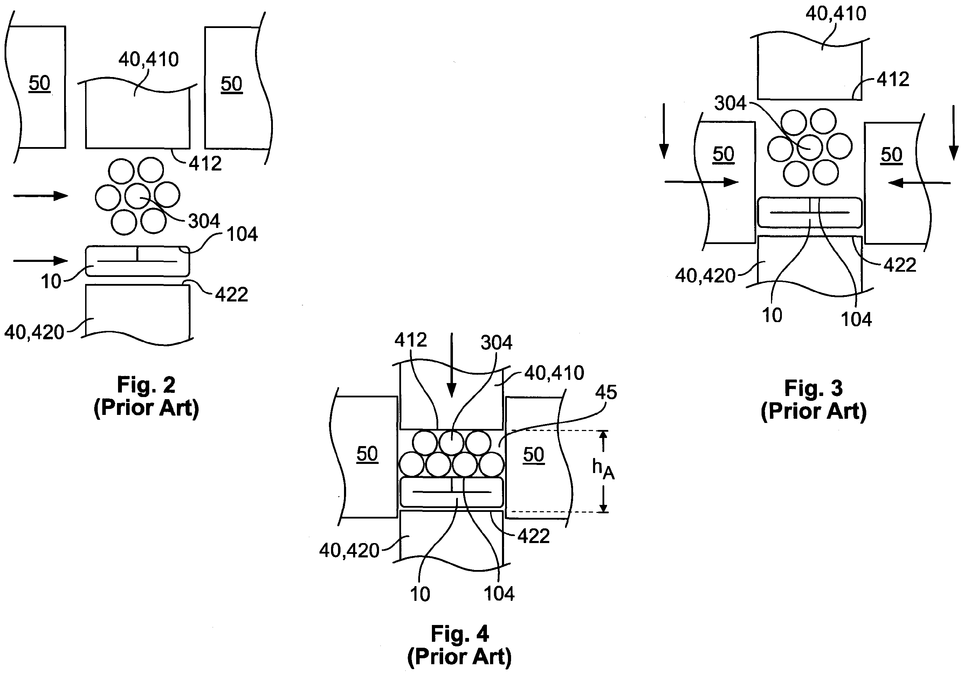

Figs. 2 to 7 show a consolidation welding apparatus 1 and an associated method of consolidation welding according to the prior art.

First, the electrical terminal 10 and the free, stripped end section of the conductor 304 of the cable 30 are inserted into a region of two opposite electrodes 40, a top electrode 410 and a bottom electrode 420, which is indicated by the two arrows in Fig. 2. The terminal 10 is placed on the bottom electrode 420, the electrical connection zone 104 of the terminal 10 facing away from the bottom electrode 420. The free end section of the conductor 304 is placed on the connection zone 104, the top electrode 410 being on the side of the conductor 304 facing away from the connection zone 104. That is, a mechanical contact region between the connection zone 104 and the conductor 304 is between the two electrodes 40.

Next, the two welding jaws 50 are moved forward into their respective working positions. For this purpose, the two welding jaws 50 are moved downward (with reference to Fig. 3), and then by a sideways movement put with a free end onto the bottom electrode 420 and the terminal 10. In the prior art, the terminal 10 in the welding range, with the electrical conductor 304, is approximately as wide as the bottom electrode 420. This means that the bottom electrode 420 must be matched to a width of the terminal 10 in the region of its connection zone 104. It also means that if connection zones 104 of different widths are to be used, the bottom electrode 420 must be adjusted, i.e. replaced. This also applies to the top electrode 410. The movement of the respective welding jaw 50 is again indicated by arrows.

The conductor 304 is then mechanically pre-compressed by means of the movable top electrode 410. This means that the top electrode 410 moves onto the bottom electrode 420, and clamps the conductor 304 between its welding surface 412 and the connection zone 104 of the terminal 10. Here any play between the terminal 10 and a welding surface 422 of the bottom electrode 420 is eliminated, so that the bottom electrode 420, the terminal 10, the conductor 304 and the top electrode 410 adjoin each other with pressure, the two electrodes 40 clamping the conductor 304 and the terminal 10 between them.

Additionally, by means of the welding jaws 50, the electrical conductor 304 is clamped in an essentially 90° direction, so that a lateral movement of the electrical conductor 304 out of the welding range is impossible because of the welding jaws 50. In mechanical precompression, an initially essentially circular electrical stranded conductor consisting of multiple single wires is compressed, and its shape becomes more and more rectangular. The mechanical precompression of the electrical conductor 304 is controlled through a placement height h_{A}. This means that if the placement height h_{A} is reached, the mechanical precompression is stopped (see Fig. 4), and the actual consolidation welding method can take place.

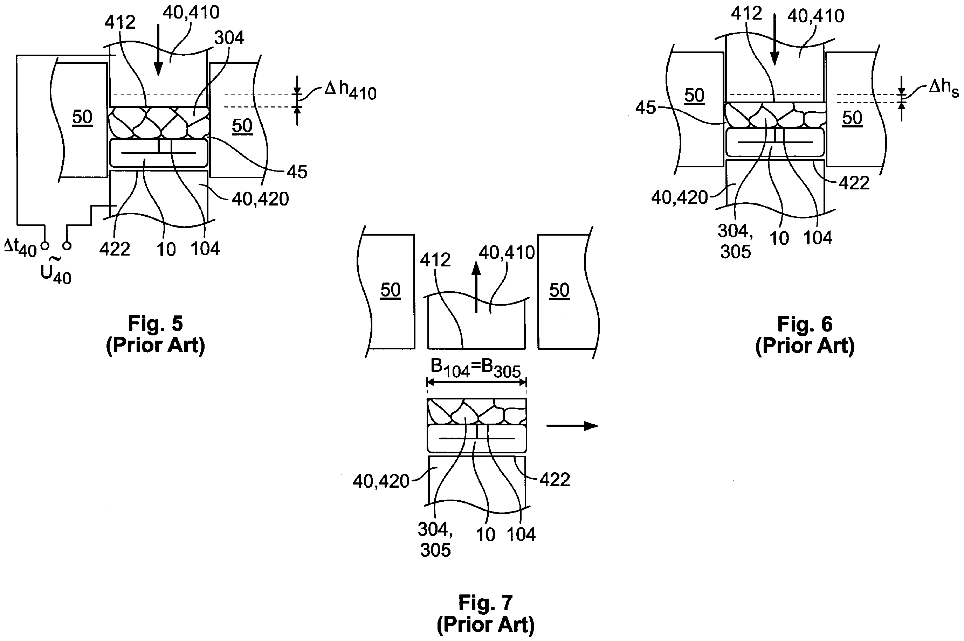

This is shown in Fig. 5. Between the top electrode 410 and the bottom electrode 420, a welding voltage U₄₀ is applied for a time span Δt₄₀. In this case the top electrode 410 presses in the direction of the bottom electrode 420 with a force, so that a cross-section reduction of the electrical conductor 304 because of melting of the conductor 304 in the welding range can be compensated for. During the welding process, the top electrode 410 moves by an amount Δh₄₁₀ in the direction of the bottom electrode 420. If the value Δh₄₁₀ exceeds a certain value, the welding process is interrupted (setting distance cutoff). A check can be made via the welding time Δt₄₀.

Directly after the welding process, it is possible to wait for a certain time, during which a force is still applied to the top electrode 410 in the direction of the bottom electrode 420. This is shown in Fig. 6. Within this dwell time, a check can take place via a setting distance Δh_{S}. This means that after the welding, the top electrode 410 continues to move for a certain distance. If the predetermined setting distance Δh_{S} is reached, the desired weld quality is achieved, and following that the cable 30, which has been welded to the terminal 10, can be removed from the consolidation welding apparatus 1. This is shown in Fig. 7, in which the welding jaws 50 and top electrode 410 are moving back into their initial positions shown in Fig. 2.

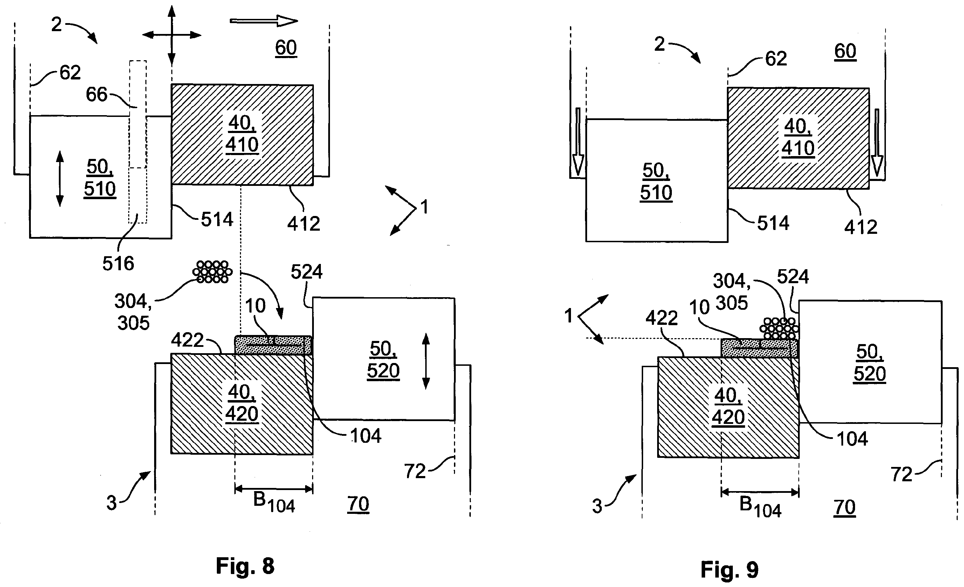

The apparatus 1 according to the invention and method according to the invention shown in Figs. 8 to 15 for consolidation welding differ from the prior art essentially in that the welding tools 40; 50; 410, 420; 510, 520 of the apparatus 1 are differently configured and differently movable. According to the invention, the welding tools 410, 510, in particular a welding device 410 and a welding jaw 510, are combined in a top tool 2, and the welding tools 420, 520, in particular a further welding device 420 and a further welding jaw 520, are combined in a bottom tool 3. In this embodiment, the welding devices 410, 420 are electrodes 410, 420. However, according to the invention it is also possible to use other welding devices 410, 420, e.g. a sonotrode 410 and an anvil 420. In this embodiment, the welding jaws 510, 520 are ceramic jaws 510, 520. However, it is of course possible to use other welding jaws 510, 520.

In this case the respective two welding tools 410, 420; 510, 520 of the top tool 2 and of the bottom tool 3 can be provided independently of each other or, as shown in Figs. 8 to 15, be adjacent to each other. In the latter case, the welding jaw 510, 520 is movably provided on a side of the appropriate welding device 410, 420. To make movement of, in particular, the top tool 2 easier, the welding jaw 510 and welding device 410 are provided in a holder 60, which in this embodiment is in the form of an electrode holder 60. The welding jaw 520 and welding device 420 are also received in a preferably fixed holder 70. In this case the holder 70 is again an electrode holder 70.

According to the invention, the whole holder 60 or the top tool 2 has at least two translational degrees of freedom (see crossed double arrows in Fig. 8), it being preferred that the holder 60 or top tool 2 is movable horizontally and vertically. Additionally, the welding jaw 510 is held elastically on/in the holder 60 in a guide 62, preferably by means of a compression spring (not shown in Fig. 8), and can move linearly relative to the holder 60 and/or the welding device 410 (see double arrow in the welding jaw 510 in Fig. 8). The holder 70 and/or the welding device 420 is preferably held fixed within the apparatus 1, the welding jaw 520 being held elastically on/in the holder 70, also in a guide 72, preferably by means of a compression spring (also not shown in Fig. 8), and being able to move linearly relative to the holder 70 and/or the welding device 420 (see double arrow in the welding jaw 520 in Fig. 8); thus has at least one translational degree of freedom.

In this embodiment, the two welding jaws 510, 520, preferably of equal size, are provided essentially diagonally opposite each other at every instant during the execution of the method according to the invention. In the formation of a compression chamber 45 for a section 305 to be consolidated of the conductor 304, and in the welding method to be carried out on the bottom welding device 420 (not shown in Fig. 8) and/or on the electrical terminal 10, there is a certain overlap of the two welding jaws 510, 520. The two welding devices 410, 420, preferably of equal size, are essentially opposite each other in an idle position, whereas in the formation of the compression chamber 45 and in the welding method to be carried out, the two welding devices 410, 420 are offset relative to each other. This means (with reference to Fig. 8) that a left-hand edge of the welding surface 412 of the top welding device 410 and a right-hand edge of the welding surface 422 of the bottom welding device 420 overlap.

To form the compression chamber 45, as well as the welding surfaces 412, 422 of the two welding devices 410, 420, the welding jaws 510, 520 have appropriate lateral delimiting surfaces 514, 524. According to the invention, the two welding surfaces 412, 422 and the two delimiting surfaces 514, 524 in each case are arranged essentially parallel to each other, the delimiting surfaces 514, 524 being essentially perpendicular to the welding surfaces 412, 422. This means that when the top tool 2 and bottom tool 3 move together, an essentially rectangular compression chamber 45 is formed. It is of course also possible to use differently constructed compression chambers 45. For this purpose, the welding devices 410, 420 and welding jaws 510, 520 are provided with correspondingly configured welding surfaces 412, 422 and delimiting surfaces 514, 524.

To achieve exact guidance and also to prevent sideways movement of the top welding jaw 510 within the holder 60, the holder 60 can have a guide pin 66, which is guided in a corresponding guide hole 516 or guide (not shown in Fig. 8) via a fit feature. This ensures that the welding jaw 510 always fits closely to the welding device 410. Similarly, the bottom welding jaw 520 can be guided in its holder 70, which however is not shown in Fig. 8.

Below, execution of a method according to the invention by means of the apparatus 1 according to the invention for consolidation welding is explained in more detail on the basis of Figs. 8 to 15. In this way the conductor 304 of the cable 30 with its section 305 to be consolidated is permanently connected in an electrically conducting manner to the connection zone 104 of the terminal 10, it being possible to choose the width B₃₀₅ of the consolidated section 305 on the connection zone 104 freely within certain limits. According to the invention, in a single apparatus 1 and in a single production step, the conductor 304 is consolidated, welded to the terminal 10, and an insulation crimp of the terminal 10 is produced.

First (see Fig. 8) the terminal 10 is automatically positioned on the bottom welding device 420, in such a way that it is adjacent to the bottom welding jaw 520 with a narrow longitudinal side. The terminal 10, which is supplied on a reel, is still fixed to the support strip 110. Then the cable 30, which is stripped on its free longitudinal end section, is positioned with its section 305 to be consolidated of its conductor 304 on the connection zone 104 of the terminal 10 (see Fig. 9). Here it is preferred that the section 305 to be consolidated also comes to be as close as possible to the bottom welding jaw 520. The top tool 2 can already be moving.

The top welding tool 410, with its lateral welding jaw 521, is adjusted to the weld width B₃₀₅, which can be less than a width B₁₀₄ of the terminal 10 in the region of its connection zone 104, by a (mechanical or electrical) motor (see Figs. 8 to 11). For this purpose, the top tool 2 or the holder 60 of the top tool 2 moves to the right in the horizontal direction onto the bottom welding jaw 520 (see Fig. 8). If the lateral delimiting surface 514 of the welding jaw 510 for the compression chamber 45, in the vertical direction, reaches a region (see Fig. 8) of the terminal 10, the sideways movement of the top tool 2 is stopped and it is moved vertically downward (see Fig. 9).

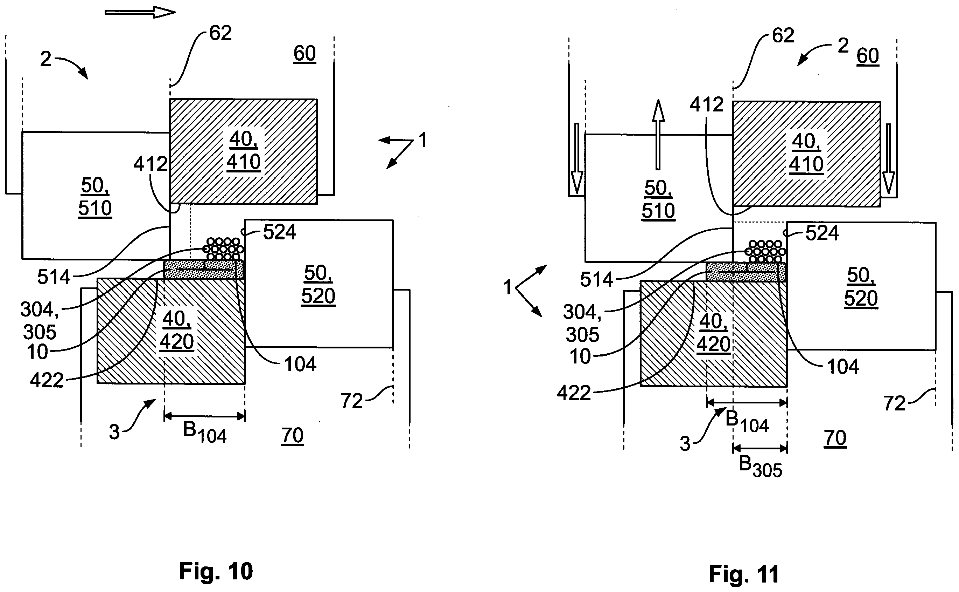

Finally, the top welding jaw 510 lands with an edge on the connection zone 104 of the terminal 10 (see Fig. 10).

Next, the top tool 2 is moved horizontally to the right in the direction of the bottom welding jaw 520 (Fig. 11), until, between the lateral delimiting surfaces 514, 524 of the two welding jaws 510, 410, the weld width B₃₀₅ or the width B₃₀₅ of the compression chamber 45 is formed. If this is the case, the horizontal movement of the top tool 2 is stopped, and following that the top tool 2 is again moved vertically onto the bottom tool 3. In this case, the top welding jaw 510 is moved against an elastic force into the holder 60 or along the top welding tool 410.

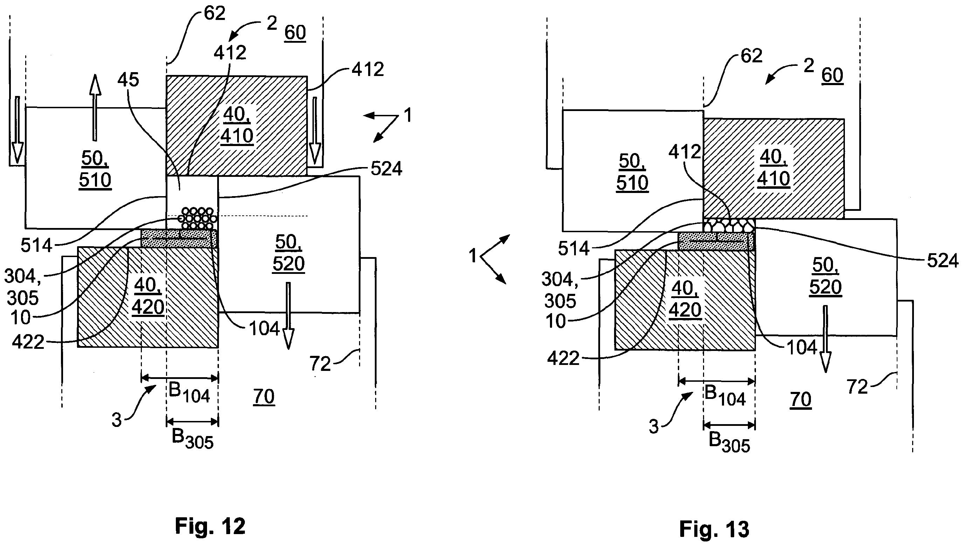

The top tool 2 is now moved vertically onto the bottom tool 3, until first the top welding device 410 and the bottom welding jaw 520 touch in an overlap region (Fig. 12), the compression chamber 45 begins to form, and is already completely closed on the connection zone 104 in the peripheral direction. If this is the case, with the vertical movement of the top tool 2, in addition to the inward movement of the top welding jaw 510 into the holder 60, an inward movement of the bottom welding jaw 520 into the holder 70 or a movement along the bottom welding tool 420 take place. Finally, the top welding device 410 comes into contact with the section 305 to be consolidated of the conductor 304, the conductor 304 then being compressed forward for a certain distance by a further movement of the top tool 3 (Fig. 13). With this the compression chamber 45 is finally completely formed.

By measuring a placement height, it is possible to determine whether one or more strands of the conductor 304 are between the top welding jaw 510 and the terminal 10. If so, the top tool 2 can preferably be moved away slightly upward and to the left, then to catch the strands by a small movement downward and to the right, and to move them in the direction of the compression chamber 45 which is being formed.

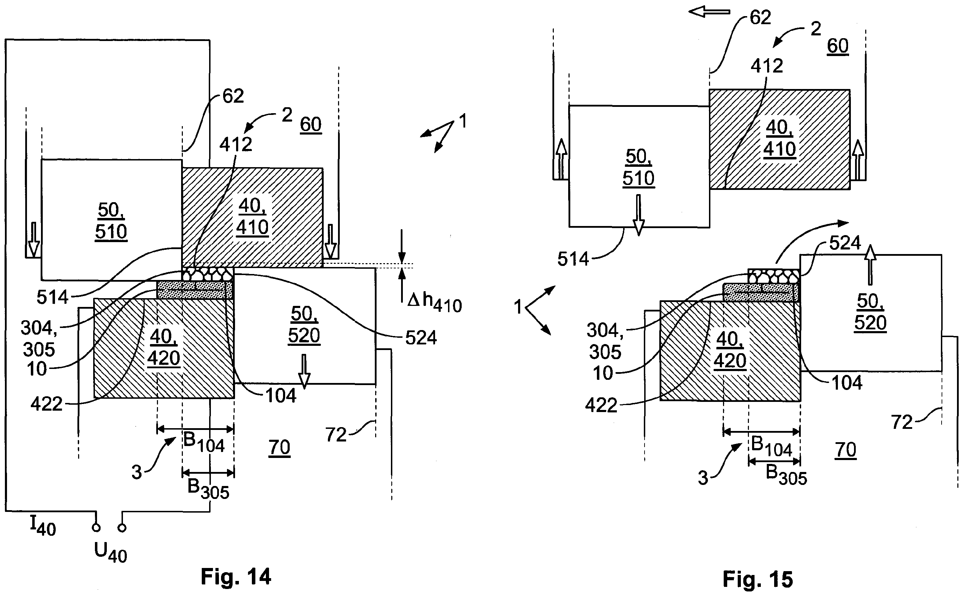

Now, by applying the welding voltage U₄₀ with a previously determined amperage I₄₀ to the two welding devices 410, 420, the standard process of resistance welding, as described above for example (Fig. 14), takes place, the conductor 304 first being consolidated and then increasingly being welded to the terminal 10. Process control of the consolidation welding preferably takes place by measuring the setting distance Δh₄₁₀ of the top welding tool 410 or of the top tool 2 or of the holder 60 or of the bottom or top welding jaw 510, 520 during the consolidation welding. According to the invention, preferably a height of the consolidated section 305 is not determined.

If the consolidation welding method and the necessary measurements to check the weld quality are finished, the top tool 2 moves back into its initial position, and simultaneously the terminal 10 can be taken from the bottom welding device 420. This can be done in the same or an opposite direction from which the terminal 10 was placed on the bottom welding device 420 (see arrow in Fig. 8). Next, a new electrical terminal 10 can be placed on the bottom welding device 420, and if required connected electrically to a different size of an electrical conductor 304 and/or a different weld width B₃₀₅.

It is of course possible according to the invention to move the top tool 2 in phases in a different way from what is described above. This applies in particular to the movement of placing the welding jaw 510 on the connection zone 104 of the terminal 10. Thus here, for example, the translational movements shown in Figs. 8 and 9 can also be overlaid. It is also possible, instead of the movement of the welding jaw 510 on the connection zone 104 (Fig. 10), first to approach the weld width B₃₀₅ with the top tool 2 and only then to lower the top tool 2.

The insulation crimp of the terminal 10 can be done at any time during the method described above. However, it is preferred if the insulation crimp is established when the terminal 10 rests securely on the bottom welding tool 420; e.g. is pressed by the top welding tool 410 onto the bottom welding tool 420. Preferably, the insulation crimp is established before or while the consolidation welding method is carried out. In this case a plunger, which is connected mechanically to the crimping tool 20, activates a cutting knife which separates the terminal 10 from the support strip 110. It is of course also possible to establish the insulation crimp before or during the movement of the top tool 2.

The apparatus 1 according to the invention can be set up so that arbitrary intersection regions can be implemented in a horizontal direction, shown in Figs. 8 to 15, of the two welding devices 410, 420. In a preferred embodiment of the invention, an idle position of the top welding device 410 is a position directly over the bottom welding device 420 (Fig. 8). Here it is preferred that the top welding device 410 can be moved relative to the bottom welding device 420 so far that the two welding jaws 510, 520 do not or cannot touch.

## Claims

1. Consolidation welding apparatus, preferably electrical resistance consolidation welding apparatus, for consolidation welding of an electrical conductor (304) to an electrical terminal (10), preferably for resistance-monitored circuitry in a motor vehicle, having four welding tools (410, 420, 510, 520), comprising
a bottom welding tool (420) of the four welding tools (410, 420, 510, 520), on which the electrical terminal (10) and thereon a conductor (304) section to be consolidated (305) can be arranged, as well as three movable welding tools (410, 510, 520) of the four welding tools (410, 420, 510, 520), whereby with a movable welding tool (510), which has two translational degrees of freedom, a width (B₃₀₅) of the conductor (304) section to be consolidated (305) on the electrical terminal (10) can be variably adjusted with reference to the bottom welding tool (420) and the electrical terminal (10), and the other two movable welding tools (410, 520) of the three welding tools (410, 420, 510, 520) can be moved in such a way that they seal off a compression chamber (45) delimited by the width (B₃₀₅) of the conductor (304) section to be consolidated (305) in a direction of its perimeter; wherein
two welding tools (410, 510) are combined in a top tool (2) and two welding tools (420, 520) are combined in a bottom tool (3), and a welding tool (510, 520) of the top tool (2) and the bottom tool (3) is a welding jaw (510, 520), and a welding tool (410, 420) of the top tool (2) and the bottom tool (3) is a welding device (410, 420), wherein the top tool (2) is provided on/in a holder (60) and the welding jaw (510) of the top tool (2) is provided elastically on/in the holder (60), and the bottom tool (3) is provided on/in a holder (70) and the welding jaw (520) of the bottom tool (3) is provided elastically on/in the holder (70).

2. Apparatus according to claim 1, wherein the width (B₃₀₅) of the conductor (304) section to be consolidated (305) is less (B₃₀₅ < B₁₀₄) than a width (B₁₀₄) of the electrical terminal (10) in the region of its electrical connection zone (104).

3. Apparatus according claim 1 or 2, wherein one welding jaw (510; 520) is arranged in the top tool (2) and the bottom tool (3) opposite the respective other welding device (410; 420) in the top tool (2) and the bottom tool (3), preferably vertically movable and preferably directly adjacent to it.

4. Apparatus according to any one of claims 1 to 3, wherein the welding jaw (510, 520) of the top tool (2) and the bottom tool (3) is a ceramic jaw (510, 520) and the welding device (410, 420) of the top tool (2) and the bottom tool (3) is an electrode (410, 420).

5. Apparatus according to any one of claims 1 to 4, wherein the holder (60) of the top tool (2) is movable in two planes, preferably vertical and horizontal.

6. Apparatus according to any one of claims 1 to 5, wherein preferably both welding devices (410, 420) are of wider form than the electrical terminal (10) in a section to be welded, or the width (B₃₀₅) of the section to be consolidated (305) of the electrical conductor (304).

7. Method for consolidation welding, preferably for electric consolidation welding, of an electrical conductor (304) to an electrical terminal (10), preferably for resistance-monitored circuitry in a motor vehicle, using an apparatus according to claim 1, wherein
on the bottom tool (3), the conductor (304) section (305) to be consolidated is positioned, and the compression chamber (45) of variable width (B₃₀₅) is formed around the conductor (304) section (305) to be consolidated by the bottom tool (3) and a top tool (2), and
next, a consolidation welding method is carried out by the bottom tool (3) and top tool (2), the conductor (304) section (305) to be consolidated being consolidated and welded.

8. Method according to claim 7, wherein before the positioning of the section (305) to be consolidated of the electrical conductor (304), an electrical terminal (10) is provided on the bottom tool (3), and
after that, the conductor (304) section (305) to be consolidated is positioned on an electrical connection zone (104) of the terminal (10), and
next, the top tool (3) is partly placed on the connection zone (104), in such a way that the width (B₃₀₅) of compression chamber (45) is restricted to the terminal (10).

9. Method according to claim 7 or 8, wherein before or during the execution of the consolidation welding method, an insulation crimp of the electrical terminal (10) with an electrical cable (30) is produced by a crimping tool (20).

10. Method according to any one of claims 7 to 9, wherein the welding process is a resistance welding process.

## Patentansprüche

1. Pressschweißeinrichtung, bevorzugt Elektrowiderstandspressschweißeinrichtung, zum Pressschweißen eines elektrischen Leiters (304) an einen elektrischen Anschluss (10), bevorzugt für Widerstandsüberwachungsschaltungen in einem Kraftfahrzeug, aufweisend vier Schweißwerkzeuge (410, 420, 510, 520), umfassend
ein unteres Schweißwerkzeug (420) der vier Schweißwerkzeuge (410, 420, 510, 520), an welchem der elektrische Anschluss (10) und daran ein zu verpressender Abschnitt (305) des Leiters (304) angeordnet werden kann, sowie drei bewegliche Schweißwerkzeuge (410, 510, 520) der vier Schweißwerkzeuge (410, 420, 510, 520), wodurch mit einem beweglichen Schweißwerkzeug (510), welches zwei Translationsfreiheitsgrade aufweist, eine Breite (B₃₀₅) des zu verpressenden Abschnitts (305) des Leiters (304) auf dem elektrischen Anschluss (10) relativ zu dem unteren Schweißwerkzeug (420) und dem elektrischen Anschluss (10) variabel angepasst werden kann und die anderen zwei beweglichen Schweißwerkzeuge (410, 520) der drei Schweißwerkzeuge (410, 420, 510, 520) derart bewegt werden können, dass sie eine durch die Breite (B₃₀₅) des zu verpressenden Abschnitts (305) des Leiters (304) begrenzte Verpresskammer (45) in deren Umfangsrichtung abdichten; wobei
zwei Schweißwerkzeuge (410, 510) in einem oberen Werkzeug (2) kombiniert sind und zwei Schweißwerkzeuge (420, 520) in einem unteren Werkzeug (3) kombiniert sind und ein Schweißwerkzeug (510, 520) des oberen Werkzeugs (2) und des unteren Werkzeugs (3) eine Schweißbacke (510, 520) ist und ein Schweißwerkzeug (410, 420) des oberen Werkzeugs (2) und des unteren Werkzeugs (3) eine Schweißvorrichtung (410, 420) ist, wobei das obere Werkzeug (2) auf/in einem Halter (60) bereitgestellt ist und die Schweißbacke (510) des oberen Werkzeugs (2) elastisch auf/in dem Halter (60) bereitgestellt ist und das untere Werkzeug (3) auf/in einem Halter (70) bereitgestellt ist und die Schweißbacke (520) des unteren Werkzeugs (3) elastisch auf/in dem Halter (70) bereitgestellt ist.

2. Einrichtung nach Anspruch 1, wobei die Breite (B₃₀₅) des zu verpressenden Abschnitts (305) des Leiters (304) kleiner (B₃₀₅<B₁₀₄) ist als eine Breite (B₁₀₄) des elektrischen Anschlusses (10) in dem Bereich von dessen elektrischer Verbindungszone (104).

3. Einrichtung nach Anspruch 1 oder 2, wobei eine Schweißbacke (510; 520) in dem oberen Werkzeug (2) und dem unteren Werkzeug (3) gegenüber der jeweiligen anderen Schweißvorrichtung (410; 420) in dem oberen Werkzeug (2) und dem unteren Werkzeug (3) angeordnet ist, bevorzugt vertikal beweglich und bevorzugt direkt daran angrenzend.

4. Einrichtung nach einem der Ansprüche 1 bis 3, wobei die Schweißbacke (510, 520) des oberen Werkzeugs (2) und des unteren Werkzeugs (3) eine Keramikbacke (510, 520) ist und die Schweißvorrichtung (410, 420) des oberen Werkzeugs (2) und des unteren Werkzeugs (3) eine Elektrode (410, 420) ist.

5. Einrichtung nach einem der Ansprüche 1 bis 4, wobei der Halter (60) des oberen Werkzeugs (2) in zwei Ebenen beweglich ist, bevorzugt vertikal und horizontal.

6. Einrichtung nach einem der Ansprüche 1 bis 5, wobei bevorzugt beide Schweißvorrichtungen (410, 420) von breiterer Form sind als der elektrische Anschluss (10) in einem zu schweißenden Abschnitt oder die Breite (B₃₀₅) des zu verpressenden Abschnitts (305) des elektrischen Leiters (304).

7. Verfahren zum Pressschweißen, bevorzugt zum Elektropressschweißen, eines elektrischen Leiters (304) an einen elektrischen Anschluss (10), bevorzugt für Widerstandsüberwachungsschaltungen in einem Kraftfahrzeug, unter Verwendung einer Einrichtung nach Anspruch 1, wobei
auf dem unteren Werkzeug (3) der Abschnitt (305) des Leiters (304), der zu verpressen ist, positioniert ist und die Verpresskammer (45) von variabler Breite (B₃₀₅) durch das untere Werkzeug (3) und ein oberes Werkzeug (2) um den Abschnitt (305) des Leiters (304), der zu verpressen ist, ausgebildet wird, und
als Nächstes ein Pressschweißverfahren durch das untere Werkzeug (3) und das obere Werkzeug (2) ausgeführt wird, wobei der Abschnitt (305) des Leiters (304), der zu verpressen ist, verpresst und verschweißt wird.

8. Verfahren nach Anspruch 7, wobei, vor dem Positionieren des zu verpressenden Abschnitts (305) des elektrischen Leiters (304), ein elektrischer Anschluss (10) auf dem unteren Werkzeug (3) bereitgestellt wird, und
danach der Abschnitt (305) des Leiters (304), der zu verpressen ist, auf einer elektrischen Verbindungszone (104) des Anschlusses (10) positioniert wird, und
als Nächstes das obere Werkzeug (3) derart teilweise auf der Verbindungszone (104) platziert wird, dass die Breite (B₃₀₅) der Verpresskammer (45) auf den Anschluss (10) beschränkt wird.

9. Verfahren nach Anspruch 7 oder 8, wobei vor oder während der Ausführung des Pressschweißverfahrens ein Isolationscrimp des elektrischen Anschlusses (10) mit einem elektrischen Kabel (30) mittels eines Crimpwerkzeugs (20) hergestellt wird.

10. Verfahren nach einem der Ansprüche 7 bis 9, wobei das Schweißverfahren ein Widerstandsschweißverfahren ist.

## Revendications

1. Appareil de soudage avec fusionnement, de préférence appareil de soudage avec fusionnement par résistance électrique, pour le soudage avec fusionnement d'un conducteur électrique (304) à une borne électrique (10), de préférence pour un circuit contrôlé par résistance dans un véhicule à moteur, ayant quatre outils de soudage (410, 420, 510, 520), comprenant
un outil de soudage inférieur (420) des quatre outils de soudage (410, 420, 510, 520), sur lequel la borne électrique (10) et par-dessus une section à fusionner (305) de conducteur (304) peuvent être disposées, ainsi que trois outils de soudage mobiles (410, 510, 520) des quatre outils de soudage (410, 420, 510, 520), moyennant quoi avec un outil de soudage mobile (510), qui a deux degrés de liberté de translation, une largeur (B₃₀₅) de la section à fusionner (305) de conducteur (304) sur la borne électrique (10) peut être réglée de façon variable par rapport à l'outil de soudage inférieur (420) et à la borne électrique (10), et les deux autres outils de soudage mobiles (410, 520) des trois outils de soudage mobiles (410, 420, 510, 520) peuvent être déplacés de telle sorte qu'ils scellent une chambre de compression (45) délimitée par la largeur (B₃₀₅) de la section à fusionner (305) de conducteur (304) dans une direction de son périmètre ; dans lequel
deux outils de soudage (410, 510) sont combinés dans un outil supérieur (2) et deux outils de soudage (420, 520) sont combinés dans un outil inférieur (3), et un outil de soudage (510, 520) de l'outil supérieur (2) et de l'outil inférieur (3) est une mâchoire de soudage (510, 520), et un outil de soudage (410, 420) de l'outil supérieur (2) et de l'outil inférieur (3) est un dispositif de soudage (410, 420), l'outil supérieur (2) étant disposé sur/dans un support (60) et la mâchoire de soudage (510) de l'outil supérieur (2) étant disposée élastiquement sur/dans le support (60), et l'outil inférieur (3) étant disposé sur/dans un support (70) et la mâchoire de soudage (520) de l'outil inférieur (3) étant disposée élastiquement sur/dans le support (70).

2. Appareil selon la revendication 1, dans lequel la largeur (B₃₀₅) de la section à fusionner (305) de conducteur (304) est inférieure (B₃₀₅ < B₁₀₄) à une largeur (B₁₀₄) de la borne électrique (10) dans la région de sa zone de connexion électrique (104).

3. Appareil selon la revendication 1 ou 2, dans lequel une mâchoire de soudage (510 ; 520) est disposée dans l'outil supérieur (2) et l'outil inférieur (3) à l'opposé de l'autre dispositif de soudage respectif (410 ; 420) dans l'outil supérieur (2) et l'outil inférieur (3), de préférence mobile verticalement et de préférence directement adjacente à celui-ci.

4. Appareil selon l'une quelconque des revendications 1 à 3, dans lequel la mâchoire de soudage (510, 520) de l'outil supérieur (2) et de l'outil inférieur (3) est une mâchoire en céramique (510, 520) et le dispositif de soudage (410, 420) de l'outil supérieur (2) et de l'outil inférieur (3) est une électrode (410, 420).

5. Appareil selon l'une quelconque des revendications 1 à 4, dans lequel le support (60) de l'outil supérieur (2) est mobile dans deux plans, de préférence vertical et horizontal.

6. Appareil selon l'une quelconque des revendications 1 à 5, dans lequel de préférence les deux dispositifs de soudage (410, 420) sont de forme plus large que la borne électrique (10) dans une section à souder, ou la largeur (B₃₀₅) de la section à fusionner (305) du conducteur électrique (304).

7. Procédé de soudage avec fusionnement, de préférence pour le soudage avec fusionnement électrique, d'un conducteur électrique (304) à une borne électrique (10), de préférence pour un circuit contrôlé par résistance dans un véhicule à moteur, utilisant un appareil selon la revendication 1, dans lequel
sur l'outil inférieur (3), la section (305) de conducteur (304) à fusionner est positionnée, et la chambre de compression (45) de largeur variable (B₃₀₅) est formée autour de la section (305) de conducteur (304) à fusionner par l'outil inférieur (3) et un outil supérieur (2), et
ensuite, un procédé de soudage avec fusionnement est réalisé par l'outil inférieur (3) et l'outil supérieur (2), la section (305) de conducteur (304) à fusionner étant fusionnée et soudée.

8. Procédé selon la revendication 7, dans lequel avant le positionnement de la section (305) à fusionner du conducteur électrique (304), une borne électrique (10) est disposée sur l'outil inférieur (3), et
après cela, la section (305) de conducteur (304) à fusionner est positionnée sur une zone de connexion électrique (104) de la borne (10), et
ensuite, l'outil supérieur (3) est partiellement placé sur la zone de connexion (104), de telle sorte que la largeur (B₃₀₅) de la chambre de compression (45) est limitée à la borne (10).

9. Procédé selon la revendication 7 ou 8, dans lequel avant ou pendant l'exécution du procédé de soudage avec fusionnement, un sertissage d'isolation de la borne électrique (10) avec un câble électrique (30) est produit par un outil de sertissage (20).

10. Procédé selon l'une quelconque des revendications 7 à 9, dans lequel le procédé de soudage est un procédé de soudage par résistance.
